# EUROPEAN PATENT APPLICATION

(11) **EP 1 731 594 A1**
(43) Date of publication of application: **13.12.2006**
(21) Application number: 05105072.2
(22) Date of filing: 09.06.2005
(51) Int. Cl.: C11C 3/10, A23D 7/00, A23D 9/00, A23G 3/00, A23C 11/04, A23G 9/32

(54) **Non-hydrogenated fat composition and its use**

(71) Applicant: Fuji Oil Europe, B-9042 Gent (BE)
(72) Inventor: Cleenewerck, Bernard, Wachtebeke (BE); Van den Bremt, Karen, 9340 Lede (BE)
(74) Representative: Luys, Marie-José A.H.

(57) **Abstract**

The present invention relates to a non-hydrogenated vegetable fat composition suitable for use in confectionery fats. The non-hydrogenated vegetable fat composition is composed of an interesterified fat obtained by subjecting a blend of an amount of at least one lauric fat and an amount of at least one non-lauric fat to an interesterification. The non-hydrogenated vegetable fat composition has an SFC which is at least 50 wt. % at 20°C and less than 15 wt. % at 35°C, a content of C12 + C 16 fatty acids of at least 55 wt. % with respect to the total weight of the fat composition and a ratio of C12/C16 fatty acids of at least 1.

## Description

The present invention relates to a non-hydrogenated vegetable fat composition suitable for use in confectionery products according to the preamble of the first claim. The present invention also relates to final products comprising this non-hydrogenated vegetable fat composition, as well as to a process for producing this non-hydrogenated vegetable fat composition.

### Background of the invention.

In the art, a wide variety of fats have been used in the production of confectionery products like coatings, fillings and centres. When the use of a rather hard fat is needed, a choice can be made between 3 main classes of fats.

The first main class are the so called cocoa butter equivalents (CBE's), which are high quality fats showing a very good cocoa butter compatibility. These fats however present the disadvantage that they need to be tempered and that they are too expensive for certain applications. The second main class of fats are the so called non-lauric cocoa butter replacers (NL-CBR). These fats show a medium compatibility with cocoa butter; they are quite cheap as they can be obtained by hydrogenation of liquid oils which are largely available. The most important disadvantage of the non-lauric cocoa butter replacers is their too high content of trans fatty acids, which create a higher risk for cardiovascular diseases. The third main class of fats concern the lauric hard butters. Lauric hard butters present the disadvantage of a very poor cocoa butter compatibility. Besides this they are mainly based on hydrogenated or fractionated palmkernel oil.

The fractionation process to which the fats resulting in cocoa butter equivalents have to be subjected, is quite expensive. Hydrogenation of fats on the other hand involves the risk to the formation of trans fatty acids, as well as the risk to complete hydrogenation giving a fat with 100% saturated fatty acids. Therefore the hydrogenation process is more and more considered as an unwanted process giving unhealthy products and consumers preference is merging clearly to food products that are substantially free of hydrogenated fats.

From the above, it will have become clear that there is a need to a hard fat composition, which is suitable for use as a confectionery fat, and to a method for producing such a fat composition. In particular there is a need to a fat composition, which may be produced at an acceptable cost, which is characterised by a good melting in the mouth without involving waxiness, which shows a sufficiently high crystallisation rate and which does not contain hydrogenated components.

From GB-A-1.495.254 an edible fat composition is known which is suitable for use in confectionery products. The fat composition has a randomly distributed fatty acid composition, and is a blend of a lauric fat with a smaller weight of a stearine fraction of a non-lauric edible C16-C18 fat. The fat is suitable for use in coating applications. The fat is obtained by random interesterification of a lauric and a non-lauric component in the presence of a sodium methylate catalyst. To increase the hardness of the fat and render it fit for use in coating applications, the fat is subjected to a hydrogenation after having been interesterified. In some cases also the non-lauric component is hydrogenated before being subjected to interesterification. GB-A-1.495.254 does however not contain any teaching as to possible ways in which hydrogenation can be avoided and still a hard butter can be obtained suitable for use in such application.

EP-A-923.874 discloses non-temper, low lauric fat blends suitable for confectionery coatings characterised by a C18:0/C16:0 ratio between 2 and 7. When producing these fats, one or more raw materials are subjected to a full or partial hydrogenation, which after blending are randomly interesterified in the presence of sodium methylate as a catalyst. EP-A-923.874 does however not teach how to obtain a coating fat, while avoiding hydrogenation of the starting, raw material.

From EP-A-532.086 a non-temper, lauric non-hydrogenated fat composition is known which is suitable for use in confectionery coatings. The major component of the composition is a lauric fat, with a steep SFC-profile, obtained by subjecting palm kernel oil to a double dry fractionation process. No interesterification is applied to the fat blend.

CA-A-2098314 discloses a non-hydrogenated hardstock for margarine, comprising a co-randomly interesterified blend of generally equal proportions of palm stearin and palm kernel stearin. The solid fat profile of this blend is rather flat with a high "tailing" - the SFC at 20°C is 49.83%; the SFC at 35°C is 22.17%; the SFC at 40°C is 10.9%. This fat is suitable for use in margarines in combination with liquid oil. However, the fat is unsuitable for use in confectionery applications like for instance coatings or centres because of its bad melting profile, involving a waxy feeling in the mouth.

EP-A-1.159.877 also discloses a hard structural fat, which is free of trans fatty acids and is suitable for use in margarine blends and spreads. A combination of such a hardstock with at least 60% liquid oil is claimed, the hardstock being an interesterified blend of a palm oil fraction and a lauric fat such as dry fractionated palm kernel oil.

### Object of the invention.

It is the object of the present invention to provide a fat composition suitable for use in confectionery applications, which has not been subjected to hydrogenation, which does not need tempering, which may be produced at an acceptable cost with respect to raw material and process costs. It is a further object of the invention to provide a fat composition which is characterised by a steep SFC-profile, a good melting in the mouth without involving waxiness and which shows a sufficiently high crystallisation speed.

### Description of the invention.

It has now been found with the present invention that this object is achieved with a fat composition showing the technical features of the characterising part of the first claim.

Thereto, the fat composition of this invention is characterised in that the non-hydrogenated vegetable fat composition is composed of an interesterified fat obtained by subjecting a blend of an amount of at least one lauric fat and an amount of at least one non-lauric fat to an interesterification, and in that the non-hydrogenated vegetable fat composition has an SFC which is at least 50 wt. % at 20°C and less than 15 wt. % at 35°C, in that the non-hydrogenated vegetable fat composition has a content of C12 + C16 fatty acids of at least 55 wt. % with respect to the total weight of the fat composition and a ratio of C12/C16 fatty acids of at least 1. With C12 + C16 fatty acids is meant that the sum of the fatty acids containing 12 carbon atoms and 16 carbon atoms.

A first preferred embodiment of the non-hydrogenated vegetable fat composition of this invention is characterised in that the fat composition has a C12/C16 ratio of at least 1.2, preferably at least 1.4, most preferably at least 1.5. Or in other words, the weight ratio between the fatty acids having 12 carbon atoms and 16 carbon atoms is at least 1.2, preferably at least 1.4. most preferably at least 1.5.

Preferably, the non-hydrogenated vegetable fat composition has an SFC at 20°C of at least 55 wt. %, more preferably at least 60 wt. %, most preferably at least 65 wt. %.

Preferably also the non-hydrogenated vegetable fat composition has an SFC at 35°C of less than 10 wt. %, more preferably less than 5 wt. %, most preferably less than 3 wt. %.

A further preferred embodiment of this invention is characterised in that the non-hydrogenated vegetable fat composition has a C12 +C16 content of at least 60 wt. %, more preferably at least 63 wt.% with respect to the total weight of the composition. Preferably the content of saturated fatty acids having 18 carbon atoms, i.e. the C18-0 content, is less than 10 wt. % with respect to the total weight of the fat composition, preferably less than 5 wt. %, most preferably less than 3 wt. %.

An additional preferred embodiment of the invention is characterised by a non-hydrogenated vegetable fat composition having a difference in SFC at 20 and 35°C of at least 50 wt. %, preferably at least 55 wt. %, most preferably at least 60 wt. %.

Optimum results are achieved with a fat composition in which the amount of the at least one lauric fat ranges from 5 to 95 wt. % with respect to the total weight of the fat composition, preferably from 40 to 95 wt. %, most preferably 60 to 95 wt.% %, and in that the amount of the at least one non-lauric part ranges from 95 to 5 wt. %, preferably from 50 to 5 wt. %, most preferably from 35 to 5 wt. % with respect to the total weight of the fat composition. Thereby preferably at least one of the at least one lauric fats is a fractionated fat with an IV of less than 12, preferably less than 9. Preferably also at least one of the at least one non-lauric fats is a fractionated fat with an IV of less than 20, preferably less than 15.

These fat compositions show a very good and sharp melting profile. From these fat compositions confectionery products can be made with a cool melting sensation in the mouth, whereas any risk to showing the minimum sign of "waxiness" is reduced as much as possible.

The present invention also relates to a process for producing such a fat composition, wherein a blend of at least one lauric fat and at least one non-lauric fat is subjected to either a chemical or an enzymatic interesterification process.

The present invention further relates to a confectionery or margarine fat containing an amount of the above described fat composition.

The present invention also relates to a confectionery product containing an amount of the above described fat composition, or the above described a confectionery fat.

The present invention further relates to confectionery products - such as a coating, a cream, a filling, a centre or a whipping cream -, to a coffee whitener or ice cream composition containing the above described fat composition or confectionery fat.

### Examples.

### Example 1.

A fat composition was prepared by blending 70 wt. % of standard palmkernel oil, 8 wt. % of coconut oil and 22 wt. % of a hard palmstearine with IV 6.5, followed by chemical interesterification using sodium methylate as a catalyst. The properties of the product are given in table 1 as Fat Nr 1.

### Comparative example A.

A fat composition was prepared by blending 60 wt. % of standard palmkernel oil with 40 wt. % of fully hydrogenated palmkernel oil. The characteristics of this fat are also given in table 1 as Comp.Fat Nr2.

**Table 1**

| Fat Nr 1 | | Comp. Fat Nr 2 |
|---|---|---|
| **SFC** | | |
| 10°C | 85,4 | 85,9 |
| 20°C | 60,7 | 62,2 |
| 25°C | 40,0 | 33,7 |
| 30°C | 14,5 | 8,9 |
| 35°C | 0,2 | 2,5 |
| | | |
| **FAC** | | |
| C-12 | 36,5 | 45,9 |
| C-16 | 25,6 | 9,0 |
| C-18 | 3,5 | 11,0 |
| C-12/C-16 | 1,4 | |
| | | |
| **Cryst. Rate at 15°C** | | |
| 2,5 min. | 17,6 | 7,2 |
| 5 min. | 44,6 | 32,7 |
| 7,5 min | 55,8 | 54,0 |
| 10 min. | 59,2 | 60,5 |
| 15 min. | 61,4 | 63,7 |

From the comparison of the 2 above fats it appears that Fat Nr 1, which is a fat according to the invention, has the same steepness in SFC-profile as Comp. Fat Nr 2, containing 40% hydrogenated fat. Crystallisation speed at 15°C of fat Nr 1 is slightly better than the composition with hydrogenated fat.

## Claims

1. A non-hydrogenated vegetable fat composition suitable for use in confectionery fats, **characterised in that** the non-hydrogenated vegetable fat composition is composed of an interesterified fat obtained by subjecting a blend of an amount of at least one lauric fat and an amount of at least one non-lauric fat to an interesterification, and **in that** the non-hydrogenated vegetable fat composition has an SFC which is at least 50 wt. % at 20°C and less than 15 wt. % at 35°C, **in that** the non-hydrogenated vegetable fat composition has a content of C12 + C 16 fatty acids of at least 55 wt. % with respect to the total weight of the fat composition and a ratio of C12/C16 fatty acids of at least 1.

2. A fat composition as claimed in claim 1, **characterised in that** the non-hydrogenated vegetable fat composition has a C12/C16 weight ratio of at least 1.2, preferably at least 1.4, more preferably at least 1.5.

3. A fat composition as claimed in claim 1 or 2, **characterised in that** the non-hydrogenated vegetable fat composition has an SFC at 20°C of at least 55 wt. %, preferably at least 60 wt. %, more preferably at least 65 wt. %.

4. A fat composition as claimed in any one of claims 1-3, **characterised in that** the non-hydrogenated vegetable fat composition has an SFC at 35°C of less than 10 wt. %, more preferably less than 5 wt. %, most preferably less than 3 wt. %.

5. A fat composition as claimed in any one of claims 1-4, **characterised in that** the non-hydrogenated vegetable fat composition has a content C12 + C16 fatty acids of at least 60 wt. %, preferably at least 63 wt.% with respect to the total weight of the composition.

6. A fat composition as claimed in any one of claims 1-5, **characterised in that** the difference in SFC at 20°C and 35°C is at least 50 wt. %, preferably at least 55 wt. %, more preferably at least 60 wt. %.

7. A fat composition as claimed in any one of claims 1-6, **characterised in that** the fat composition has a content of C18-0 fatty acids of less than 10 wt. % with respect to the total weight of the fat composition, preferably less than 5 wt. %, more preferably less than 3 wt. %.

8. A fat composition as claimed in any one of claims 1-7, **characterised in that** the amount of the at least one lauric fat ranges from 5 to 95 wt. % with respect to the total weight of the fat composition, preferably from 40 to 95 wt. %, more preferably 60 to 95 wt.% %, and **in that** the amount of the at least one non-lauric fat ranges from 95 to 5 wt. %, preferably from 50 to 5 wt. %, more preferably from 35 to 5 wt. % with respect to the total weight of the fat composition.

9. A fat composition as claimed in any one of claims 1-8, **characterised in that** at least one of the at least one lauric fats is a fractionated fat with an IV of less than 12, preferably less than 9.

10. A fat composition as claimed in any one of claims 1-9, **characterised in that** at least one of the at least one non-lauric fats is a fractionated fat with an IV of less than 20, preferably less than 15.

11. A confectionery or margarine fat containing an amount of the fat composition claimed in any one of claims 1-10.

12. A process for producing a fat as claimed in any one of claims 1 to 10, **characterised in that** a blend of at least one lauric fat and at least one non-lauric fat is subjected to a chemical interesterification process.

13. A process for producing a non-hydrogenated fat vegetable composition as claimed in any one of claims 1 to 10, **characterised in that** a blend of at least one lauric fat and at least one non-lauric fat is subjected to an enzymatic interesterification .

14. A confectionery product containing an amount of the fat composition of any one of claims 1-10, or a confectionery fat of claim 11.

15. A confectionery product as claimed in claim 14, **characterised in that** the confectionery product is a coating, a cream, a filling, a centre or a whipping cream.

16. A coffee whitener containing an amount of the non-hydrogenated vegetable fat composition of any one of claims 1-10, or the confectionery fat of claim 11.

17. Ice cream composition containing an amount of the non-hydrogenated vegetable fat composition of any one of claims 1-10, or the confectionery fat of claim 11.
